Europäisches Patentamt

European Patent Office

Office européen des brevets

(19)

(11) **EP 1 443 704 A1**

(12) **EUROPEAN PATENT APPLICATION**

(43) Date of publication:
**04.08.2004 Bulletin 2004/32**

(51) Int Cl.⁷: $H04L\ 12/26$, $H04L\ 12/18$

(21) Application number: **03290255.3**

(22) Date of filing: **03.02.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicants:
- **INRIA INSTITUT NATIONAL DE RECHERCHE
  EN INFORMATIQUE ET EN AUTOMATIQUE
  Rocquencourt F-78153 Le Chesnay (FR)**
- **Hitachi, Ltd.
  Chiyoda-ku, Tokyo 101-8010 (JP)**

(72) Inventors:
- **Takatani, Yukihiro
  06400 Cannes (FR)**
- **Nonaka, Naomichi
  Yokohama-shi, Kanagawa 223-0052 (JP)**
- **Barakat, Chadi
  06600 Antibes (FR)**

(74) Representative: **Beetz & Partner Patentanwälte
Steinsdorfstrasse 10
80538 München (DE)**

(54) **Information collecting protocol**

(57)     This invention relates to a method and an apparatus for collecting information from a set of network devices. The apparatus for collecting information from a set of devices (2), comprises sending means (17) for sending information requests to devices (2), which instruct a number of devices (2) to respond, receiving means (18) for receiving responses from the queried devices (2), and flow control means (20) to control the number of devices which are queried in one step based on the received responses in order to reduce the risk of a network congestion.

Fig. 10

**EP 1 443 704 A1**

## Description

This invention relates to a method and an apparatus for collecting information from a set of network devices.

In the case that a host (server) wants to collect information from a large number of other hosts (clients) via a network with limited bandwidth, the server cannot ask all clients to send their reports comprising the requested information at the same time, because otherwise the network will be congested by the reports of the clients attempting to send their reports to the server. A network congestion may also appear when the server attempts to send requests for information to a large number of hosts in a short period of time.

In some prior art, in order to reduce the risk of a network congestion, the clients respond with a random timing or with a random delay. In JP-10200538 a method and system for collecting responses is disclosed. The terminals randomly suppress a response based on a response suppression dispersion width that is assigned to the terminals in order to disperse the plurality of responses from the terminals. Since in this prior art technique, the actual response times of the clients are randomly distributed and not controlled by the server, an effective congestion control may not be performed. In the case of a very large number of terminals, either the response suppression dispersion width must be very large and, accordingly, the required time to collect all responses from the terminals is also very large, or there still exists a significant probability of clients sending their reports simultaneously to the server and thereby causing a network congestion.

A further problem is the coexistence of the information collection process with other network flow or other network connections. If the information collecting process dominates the network bandwidth and does not share the utilization of bandwidth with other network flows or connections, the overall network performance will suffer.

In "Providing scalable many-to-one feedback in multicast reachability monitoring systems" by K. Sarac and K.C. Almeroth in 4th IFIP/IEEE Int. Conf. on Management of Multimedia Networks and Services, MNS 2001, Chicago, IL, USA, Oct. 29 - Nov. 1, 2001, a number of reachability monitoring and feedback collection methods for multicast sessions are investigated. If the collected information is identical for all or at least many clients, e.g. alarm reports resulting from dropped multicast packets, the reported information can be aggregated inside the network or filtered at the clients' side or at some intermediate network nodes. However, if the clients do not send the same information and the server requires the reception of the entire information sent by all clients, these techniques cannot be applied.

It is an object of the present invention to provide a method and an apparatus for collection information from a set of network devices and avoiding network congestion as much as possible. It can also be an object of the present invention to increase the number of reports received by the server during an available time period. It can further be an object of the present invention to decrease the time necessary to receive reports from all clients.

The above objects are achieved by the independent claims. The dependent claims refer to preferred embodiments of the invention.

In a method for collecting information from a set of network devices, in particular from a large number of network devices (e.g. > 10,000), one or more information requests are sent via the network to the network devices (clients). The requests are sent from a certain host (server) which may be any kind of device, in particular a computerized device, in the network. The information requests are sent to clients which may be any kind of computerized network device, e.g., a personal computer, a workstation, a router, a telephone terminal, a mobile (phone) terminal, a TV set, or any kind of information collecting or measuring device connected to the network. For the purpose of this application, a client may also be a logical device arranged in a physical device. In this respect, requests may be sent to a plurality of logical devices which may be partially arranged in the same apparatus. The devices are connected to the sender of the requests by a network, e.g., a bus system. The sender is interested in collecting the requested information from all logical devices, e.g. services in a computer system, and avoiding a network congestion as much as possible. The network may be a data or telephone network, in particular an IP based network, the internet, an ISDN or analogue telephone network, an optical fiber network, a satellite network, or a bus system.

The set of network devices or the list of network devices to be queried may be fixed during the information collection process or the set/list may be updated by a certain mechanism.

In the information requests, a number of clients are asked to respond to the requests by sending responses (reports) comprising the requested information to the sender of the request, i.e., the server. The server collects responses from the queried clients, which are transmitted via the network.

In order to minimize the network congestion and/or the time necessary for receiving reports from all clients, the number of clients which are queried in one step is controlled based on a status of the received responses. If the number of received responses is equal to the number of queried clients, no request and/ or response has been lost. This indicates that no network congestion occurred, and, accordingly, in the next step more clients may be queried, i.e., the number of clients instructed to respond may be increased. On the other hand, if the number of received responses is smaller (by a certain threshold) than the number of queried clients, a network congestion is likely, and the number of clients instructed to respond should be decreased. In the next step, new information requests are sent to query further clients. These steps may be repeated until responses from all clients are collected or a predetermined time period T expires.

An information request may comprise an information type to indicate the type of requested information from a client. According to the transmitted information type, any kind of information may be collected by the information collecting protocol.

The method according to the present invention is able to collect information from a large number of network devices while avoiding a network congestion as much as possible. The number of clients which are queried in one step is controlled dynamically to adapt the number of issued requests and, hence, the number of pending responses corresponding to the actual status of the network and the situation of traffic flowing therein.

The present invention can be used in different scenarios. The information collecting protocol is applicable to collect any kind of information from the clients without imposing a constraint on the collected information. According to the invention, it is not required that the collected information is filterable, as in some prior art techniques. As an example, the server may want to know which clients have well received a certain document that the server has transmitted to the clients before. Other kinds of information that can be collected from clients are, e.g., the quality of TV or video reception, the weather, an electronic vote, the numbering of a population, etc.

Due to the congestion control mechanism controlling the number of queried clients, the present invention is not aggressive to other applications in the network. The information collection does not dominate the network bandwidth, because, when a network congestion occurs, the number of clients which are queried in one step, and, therefore, the demanded network capacity is reduced. Accordingly, the information collection shares the utilization of network bandwidth with other network applications.

An apparatus for collecting information from a set of network devices comprises sending means for sending information requests to clients, receiving means for receiving responses from the queried clients, and flow control means to control the number of clients which are queried in one step. The apparatus may be a general purpose (personal) computer or workstation equipped with a network interface and the respective software, or a special purpose device in the network.

The flow control means may be adapted to determine a maximum number of clients to be queried (CWND). CWND stands for congestion window. Under consideration of the maximum number CWND of clients to be queried, selection means may be adapted to select devices from the set or lists of devices, wherein the number of selected devices being smaller than or equal to the maximum number CWND of devices to be queried. The selection of devices may be performed by maintaining appropriate data structures, e.g., lists, circular buffers, chained lists, two-way chained lists, arrays, trees, or other appropriate means to maintain or select a large number of items. The selection of the respective number of devices from the set of devices may be performed randomly or according to some priority criteria.

Network congestion detection means may be adapted to detect a network congestion based on the number of received responses from the queried clients. In order to control the congestion of the network caused by requests sent to the network devices and/or the responses from the queried devices comprising the requested reports, the flow control means may be adapted to determine the maximum number CWND of devices to be queried based on the detected network congestion. Because the volume of responses comprising the requested information is considerable, the limitation of bandwidth is more pronounced on the reverse path from the clients to the server. Due to the congestion control, which is performed by the flow control means by updating the maximum number CWND of clients to be queried, the number of requests and, likewise, the number of responses flying in the network are dynamically adjusted to the detected network congestion.

A number of clients up to the maximum number CWND may be selected and queried simultaneously. It is particularly favourable to select a number RS of clients, which is smaller than the maximum number CWND, and to query the selected clients simultaneously. In this case, several groups of clients, each comprising RS selected devices, may be queried in one step of the information collecting process, wherein the total number of selected clients in all groups is equal to or smaller than CWND. In any case, up to the maximum number CWND of devices are instructed to respond before a network congestion is detected based on the number of collected responses.

A client may investigate the contents of a received information request and decide, if it is addressed by the request and instructed to respond to the request. In the affirmative case, the client sends a report comprising the requested information to the server.

Responses from the queried devices may be collected for a predetermined collection time period T0 which may be indicated by a timer. After the expiration of the collection time period T0, the network congestion detection may be performed based on the number of collected responses.

The selection means may preferably select clients for which responses have not yet been received, in order to perform an error control. If a request to a device or a response from a device is lost in the network, e.g., because of a network congestion, the device is selected later on, and a further request for information is sent to the device. The selection means may maintain a list of the devices in the network and mark the devices for which responses have been received, so as to select the remaining devices when continuing the information collection after performing the network congestion detection and/or after the expiration of a timer period.

A further preferred selection strategy is to select new clients which have not been selected before, in order to, first of all, send requests to all clients. After requests have been sent to all devices, clients may be selected for which responses have not yet been received. Based on this selection strategy, all devices are queried once, and subsequently, devices with a missing response are repeatedly queried. This selection strategy has the advantage that it is better to try new clients rather than wasting time sending multiple requests to a device which is located behind a congested network link. Multiple requests to the same client result at a maximum in one response, however, sending requests to different clients may result in more than one response. Furthermore, the absence of a response is most probably a sign of a congestion of the network. This congestion may be transitory, so it is better for the server to wait a little time before retransmitting the request. There is a good chance that the congestion disappears during this time and the request succeeds.

In a preferred embodiment of the invention, the clients are queried in rounds. In a first round, requests are sent to all clients. No requests are retransmitted to clients, the responses of which are lost. The absence of a response from a client can be the result of the loss of the request or the loss of the response. In both cases no requests are retransmitted. In subsequent rounds, those clients are queried for which no response to a request in the previous round has been received. The operation in rounds has the advantage that no time is wasted sending multiple consecutive requests to devices which have already suffered from a network congestion, either by a lost request, or a lost response. Another advantage of this embodiment is the absorption of the excessive delay that some responses may experience while traveling through the network. Between the transmission of a request in a round and the retransmission of the request in the next round there is enough time for the response to arrive at the server, supposed the response is not lost.

In order to maintain lists of clients to be queried, list of operation means may be provided. The selection means may select clients from a respective list of the maintained lists. The maintained lists are preferable suited to query the devices in rounds. A first list may comprise references to all devices. A second and further lists may comprise references to devices for which no response to a request resulting from a previous selection of the device has been received.

In order to transmit individual requests, an information request may be addressed to a single device, or it may be addressed to a plurality of network devices in order distribute general requests to the addressed devices.

It is preferable to multicast or broadcast information request packets to a plurality of network devices. The clients may join a particular multicast group and receive the respective information request packets which comprise information requests for a number RS of the devices. DVMRP (Distance Vector Multicast Routing Protocol), PIM (Protocol-Independent Multicast), SSM (Source-Specific Multicast), etc., may be used as multicast protocols to deliver data packets.

Request generation means may be adapted to generate information requests to be sent to the devices. The generated information requests may be arranged in information request packets, each comprising information requests for a number RS (request size) of hosts. By sending information request packets, the network traffic caused by the requests is reduced, because a single request travelling through the network may instruct a plurality of clients to respond.

The request generation means are preferably executed when the timer indicates that the collection time period T0 has expired. New requests may be issued after performing the network congestion detection and updating the maximum number CWND of clients to be queried. Information requests or information request packets may also be sent when a response from a client is received, since then a new client may be queried according to the constraint relating to the maximum number CWND of clients to be queried.

It is particularly useful to issue new requests after a number of responses, corresponding to the request size RS, have been received. In this case, a new information request packet of request size RS comprising RS requests can be sent to the clients.

An information request or information request packet may preferably be sent, if the difference between the maximum number CWND of clients to be queried and a number PIPE of requested reports which have not been received (that are, so to speak, still in the network pipe) exceeds a predetermined threshold. In this case, new information requests may be issued without violating the constraint relating to the maximum number of clients. An information request packet of request size RS may, e.g., be issued, if the above difference exceeds the request size RS of an information request packet.

In case a large number of responses have been received since sending the last requests, a number NRP of information request packets, each having a request size RS, may be sent to the network devices while observing the maximum number CWND of devices to be queried. The request generation means may accordingly determine the number of information request packets (NRP) to be sent under consideration of the maximum number CWND of clients to be queried and the number PIPE of requested reports which have not been received. These request packets may then be sent to the clients.

An information request or an information request packet may comprise device identification information to indicate one or more selected devices. The device identification information is preferably information identifying devices at the session level, e.g., the session Ids of clients of interest. Devices may be identified by device identification codes or by any other means to identify individual devices from a set of devices. An information request or an information request packet may comprise one or more device identification codes (IDs) which each identifies a respective device.

Device identification may also be aggregated by the server to reduce the volume of the requests. The aggregation of IDs can be done in different ways. For example, instead of sending a set of contiguous IDs, an information request packet can also comprise the first and the last ID in the set. All clients with a corresponding ID between the first ID and the last ID respond to the request by sending their reports. Aggregation can also be done by using masks in the same way as IP addresses are aggregated in CIDR (Classless Inter-Domain Routing). For example, the server can ask all clients with 32-bit IDs in the set X.Y.Z/24 to send their reports. This set covers all IDs with the three highest-order bytes (or 24 bits) equal to X.Y.Z. The type of ID aggregation may be chosen by the server. It can be fixed or dynamically adapted to the network type and/or network congestion. E.g., if there is enough bandwidth over a satellite channel, the server can avoid aggregation by separately sending the IDs of the clients of interest. Sending the IDs separately reduces the processing time at the server. The IDs of the queried clients may be comprised in a respective information request packet which is broadcast to all clients. However, when the list of IDs is long, it consumes more bandwidth and requires more processing power at the clients' side to decide whether to send responses or not. In order to determine if a client is addressed by the received or request packet, the client may examine the device identification information received with a request by comparing device identification codes.

Round-trip time estimation means may be provided to estimate the round-trip time of a client query based on the time period between sending a request and receiving a respective response. The estimated round trip time of a query may be used to judge a congestion of the network and/or to determine the number of clients which are queried in one step.

According to a preferred embodiment of the invention, the collection time period T0 is set based on estimated round-trip times of client queries. The collection time period T0 may preferably be set based on the average and the mean deviation of the estimated round-trip times. In order to estimate the average and the variance of the round-trip time, it is suitable to use an exponentially weighted moving average algorithm. It is favourable to set the collection time period T0 based on the estimated round trip times, because this provides a reasonable estimate until when most responses will be received.

Since for a large number of clients the arrival times of responses at the server follow some statistical distribution (e.g. a Gaussian distribution), the occurrence of an unexpected event (e.g. the loss of a response) may be evaluated based on an comparison of the number of expected responses to the number of collected responses during a time period corresponding to the average plus a multiple of the mean deviation of the estimated round trip times. E.g., in case of an Gaussian distribution of the response entry times, it is expected that 99,9% of the responses are collected within a time period corresponding to the average plus three times the mean deviation of the estimated round trip times. Also, the probability of receiving a response after four times the mean deviation of the estimated round trip times is less than 0,01 %. If this event happens, this is a clear indication of an extraordinary event, e.g. the response is lost and will not arrive at all. Based on the parameters of the assumed statistical distributions, estimates on the reliability of the assumptions and of the probabilities of errors may be performed.

According to a preferred embodiment of the invention, the point in time is determined when a corresponding request to a received response was sent by the server. This request time may be compared to a respective deadline for the request and the response may be labeled based on the result of the comparison. Accordingly, a received response is judged based on the time when the corresponding request was sent. A response is judged as a good response, if it was received before the deadline corresponding to the respective request time. If a response is received after the corresponding deadline, the response is considered a late response. Nevertheless, the information sent in a late response may still be used for the information collecting purpose.

Based on the labeling of the responses, a loss rate for responses may be calculated. For the purpose of detecting a network congestion, it is preferable to consider late responses as lost responses and to calculate the loss rate based on the number of late responses and the total number of responses to be received. The network congestion may be determined by comparing the calculated loss rate with a congestion threshold. The congestion threshold may be a fixed number or it may be updated during the information collecting process. In order to detect multiple network congestion states, e.g., a Congestion state and a Severe Congestion state, it is suitable to compare the calculated loss rate with a plurality of thresholds (CT, SCT). Multiple network congestion states may relate to the degree of congestion in the network.

A flow control state may be determined based on the detected network congestion and/or the detected network congestion state. The maximum number CWND of devices to be queried may be determined and/or updated based on the determined flow control state. Using flow control states allows an effective congestion control. For example, a Slow Start state may be applied in the beginning of the information collecting process in order to evaluate quickly the network capacity. In the Slow Start state the maximum number CWND may be increased quickly until a network congestion is detected. After detecting a network congestion, a Congestion Avoidance state may be set. During the Congestion Avoidance state, the maximum number CWND of devices may be increased slowly. When a network congestion is detected, the maximum number CWND of devices may be decreased in the Congestion Avoidance state. When detecting a severe network congestion, congestion control may be reset, i.e., the maximum number CWND is set to an initial (small) value, e.g. to RS. In addition, the flow control state may be switched, e.g. to the Slow Start State.

The maximum number CWND of devices to be queried may be increased when a report is received before its deadline (good report). By increasing the maximum number CWND more device may be queried in one step. This is reasonable, because, when a report is received before its deadline, this is an indication that no congestion occurs in the network, which, on the other hand, would result in lost requests or late/lost responses. The maximum number CWND may be incremented by a fixed predetermined number. Incrementing CWND by 'one' whenever a report is received before its deadline will double the number CWND when all responses from queried devices arrive. This congestion control approach increases the maximum number CWND of devices to be queried quickly in order to evaluate the available bandwidth. This congestion control approach is preferably applied in the beginning of the information collecting process, e.g., in the Slow Start state.

The maximum number CWND of devices to be queried may also be incremented by a calculated number, e.g., the ratio RS/CWND of the request size RS of an information request packet to the maximum number CWND. With this rule, the maximum number CWND increases by RS when all sent responses arrive. This allows the server to increase the number of pending responses more slowly. This congestion control approach is preferably applied in the steady state of the information collecting process, e.g., the Congestion Avoidance state.

When a network congestion is detected, the maximum number CWND of devices to be queried may be decreased, in particular divided by a predetermined number. Preferably, the maximum number CWND is divided by 'two' to reduce the number of devices which are simultaneously probed by the server.

The congestion control method according to one preferred embodiment increases the number of requests and, consequently, the number of responses in the network by incrementing the maximum number CWND of devices to be queried in a conservative way by incrementing CWND. Furthermore, the congestion control reacts to a congestion in the network by cutting the maximum number CWND by in half. This is similar to the TCP (Transport Control Protocol) congestion control method implementing an additive increase and multiplicative decrease algorithm as a function of network conditions.

Based on the congestion control method of the present invention, the information collecting process reacts to a network congestion in the same way as TCP behaves, so that competing TCP traffic does not suffer. Since most of the internet traffic is carried by TCP, the present information collecting protocol may perfectly coexist in the network with applications using TCP without dominating the network and consuming most of the available bandwidth.

The information collecting protocol according to the present invention infers a network congestion from the status of received responses from clients and controls the number of requests which are pending in the network. The invention controls the congestion that may be caused by the requests sent by the server and by the responses of the clients. The invention also maximizes the number of responses received by the server at the end of the available time period T. The time necessary to receive responses from all clients is also minimized by the present information collecting protocol, since the number of issued requests is maximized up to the point where a network congestion develops.

These and other potential objects, features and advantages of the present invention will appear more fully from the following detailed description of preferred embodiments of the invention. It is to be understood, however, that the scope of the present invention is not limited by an given embodiment shown in the accompanying drawings, wherein

Fig. 1 shows a diagram to explain the overall flow of an example of the information collecting protocol according to the present invention;

Fig. 2 shows an exemplary structure of a satellite network the present invention may be applied to;

Fig. 3 shows an exemplary configuration of a hardware structure for a server or client;

Fig. 4 shows a schematic block diagram for an embodiment of a server;

Fig. 5 details an example for a list of clients provided in a server;

Fig. 6 details an example for the packet format of a request;

Fig. 7 details an example for the packet format of a response;

Fig. 8 is a flow chart illustrating an information collecting process performed by the server in one embodiment of the invention;

Fig. 8a-g show details of the information collecting process of Fig. 8;

Fig. 9 shows a graph illustrating the adaptation of the congestion window;

Fig. 10 shows an illustration explaining the sliding of the congestion window; and

Fig. 11 is a flow chart illustrating a process performed by a client in one embodiment of the invention;

It is to be understood that the Figures and descriptions of the present invention have been simplified to illustrate elements that are relevant for a clear understanding of the present invention, while eliminating, for purposes of clarity, other elements that may be well known. Those of ordinary skill in the art will recognize that other elements are desirable and/or required in order to implement the present invention. However, because such elements are well known in the art, and because they do not facilitate a better understanding of the present invention, a discussion of such elements is not provided herein.

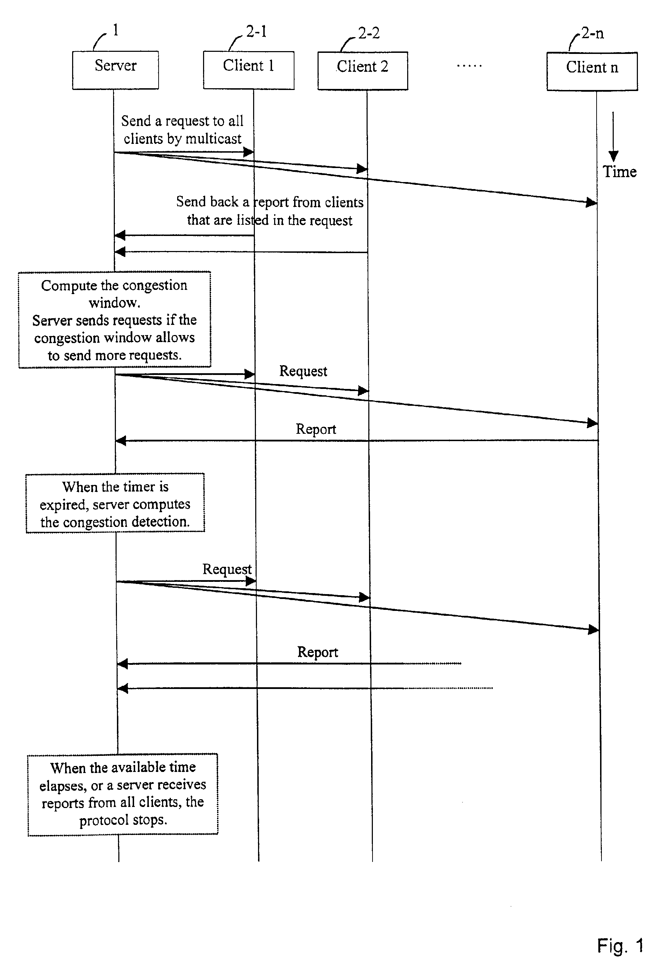

In the following, the overall flow of an example of the information collection protocol according to the present invention will be explained with reference to Fig. 1.

In the beginning, a server 1 sends a first request to the clients 2-1, 2-2, ..., 2-n by multicast. The request includes a set of client IDs. When a client 2 receives the request, it investigates if its ID is included in the received request. If the client ID exists in the request, the client 2 sends a respective response (report) to the server 1.

In order to collect information from all clients 2 without causing a network congestion, the server 1 controls the number of clients which the server 1 instructs to send back a report and selects a respective number of clients to be queried. When receiving a report, the server 1 computes a congestion window. The congestion window indicates how many clients 2 the server 1 can instruct to report at the same time. If the congestion window allows to send more requests, the server 1 sends new requests to the clients 2.

When a timer expires, the server 1 performs a congestion detection. The server 1 infers if the network is congested or not based on the number of reports received until timer expiration. Based on the computed network congestion, the server 1 updates the congestion window used for sending future requests. When the total time T to collect information elapses, or the server 1 has received reports from all clients 2, the information collection process stops.

The present invention may be implemented as a network protocol to collect information from a large number of devices in the network, e.g. the internet. If available by the employed network, the server can reach the clients by multicast. Clients may join a multicast group and the server may collect information from all clients in this multicast group.

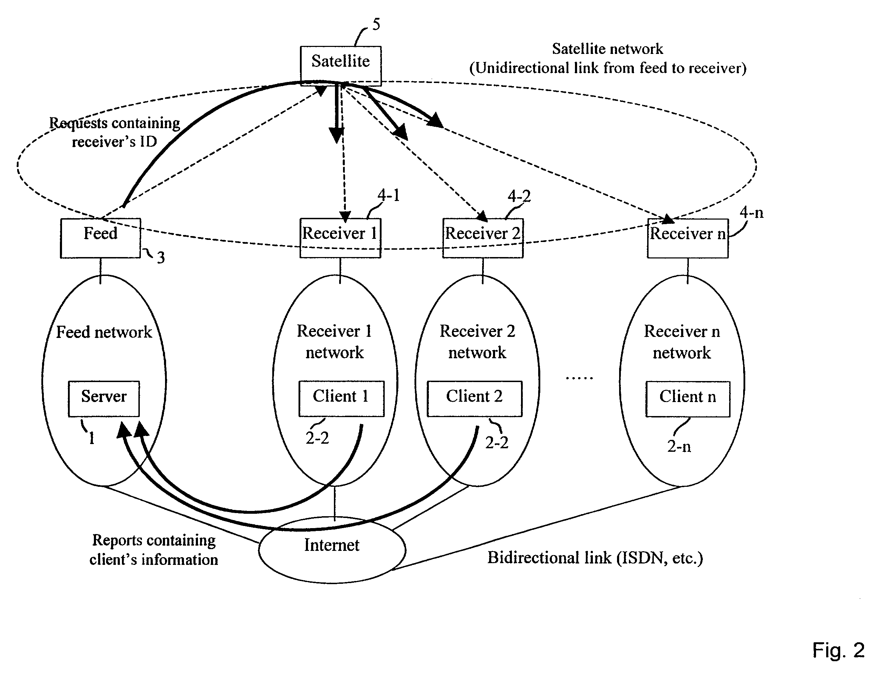

Fig. 2 shows an exemplary structure of a satellite network which is used to collect information from the clients 2-1, ..., 2-n. A feed 3 is a network router with a network interface to a satellite link. Receivers 4-1, ..., 4-n are network routers with a receive-only network interface to the satellite link. The satellite link is a unidirectional link from the feed 3 via a satellite 5 to the receivers 4-1, ..., 4-n. The server 1 is located in a network which is connected to the feed 3. The clients 2-1, ..., 2-n are located in the local networks of the receiver 4-1, ..., 4-2. Each local network is, in addition, connected to the internet via bidirectional links.

In the shown satellite network, requests from the server 1 are broadcast to the clients 2-1, ..., 2-n through the satellite link. The requests comprise IDs of selected clients in the receiver networks. The queried clients respond by sending the requested information to the server 1 through the internet. Other network structures, e.g., with bi-directional satellite links, without satellite links, with a wireless network, with a mobile ad-hoc network, etc., may also be employed.

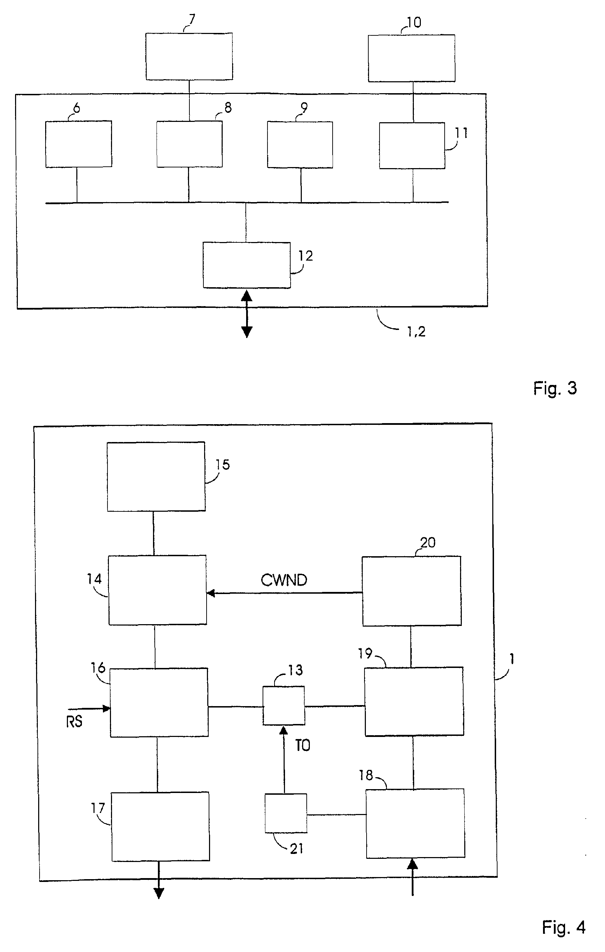

Fig. 3 shows an exemplary configuration of a hardware structure for a server 1 or client 2. A server 1 and/or client 2 may comprise a CPU 6, a hard disk drive 7, a disk controller 8, a memory 9, a console 10, a console controller 11 and/or a network controller 12. The network controller 12 is connected to the network which is arranged to transmit requests from the server 1 to the clients 2 and responses from the clients 2 to the server 1. The server 1 and/or the client 2 may be any kind of computerized network device, e.g., a (personal) computer, a workstation, a router, a telephone terminal, a mobile (phone) terminal, a TV set, or any other kind of information collecting or measuring device connected to the network.

Fig. 4 shows a schematic block diagram of an embodiment of a server 1. Selection means 14 select clients to be queried from one or more lists of clients which are maintained by list operation means 15. The number of clients selected by the selection means 14 is determined under consideration of the maximum number CWND of clients to be queried in one step. Request generation means 16 generate information request packets of a request size RS. Each request packet comprises information requests for a number RS of the selected clients. The request generation means 16 are executed when the timer 13 indicates that the collection time period T0 has expired and/or when a response from a client 2 is received.

The generated request packets are sent to the clients 2 by sending means 17. The request packets are multicast to all clients 2 in a particular multicast group. Those clients 2 which are addressed by the device identification information in the request respond by sending the requested information in individual responses to the server 1.

Receiving means 18 receive the responses from the queried clients 2. The server 1 extracts the requested client information from the received responses and stores and/or processes the extracted information.

Network congestion detection means 19 detect a network congestion based on the number of received responses and the number of sent requests. The network congestion detection means 19 calculate a loss rate for responses and determine the network congestion by comparing the calculated loss rate with a congestion threshold CT and a severe congestion threshold SCT.

Flow control means 20 determine a flow control state (Slow Start state, Congestion Avoidance state) based on the network congestion detected by the network congestion detection means 19 and update the maximum number CWND of clients to be queried in one step based on the determined flow control state.

Roundtrip time estimation means 21 estimate the roundtrip time of a client query based on the time between sending a corresponding request and receiving a respective response. The roundtrip time estimation means 21 set the collection time period T0 of the timer 13 based on the average and the mean deviation of the estimated round trip times. The timer 13 is rescheduled using the current value of T0 calculated by the round trip time estimation means 21 after the timer 13 has expired.

When the timer 13 has expired, the request generation means 16 determines if it is possible to send new requests without violating the constraint corresponding to the maximum number CWND of clients to be queried in one step. If the number of clients which have been probed but for which no response has been received yet (i.e. the number of open requests) is smaller than the maximum number CWND, new requests are generated and sent to the clients 2.

The expiration of the timer 13 also triggers the network congestion detection means 19 to perform a network congestion detection.

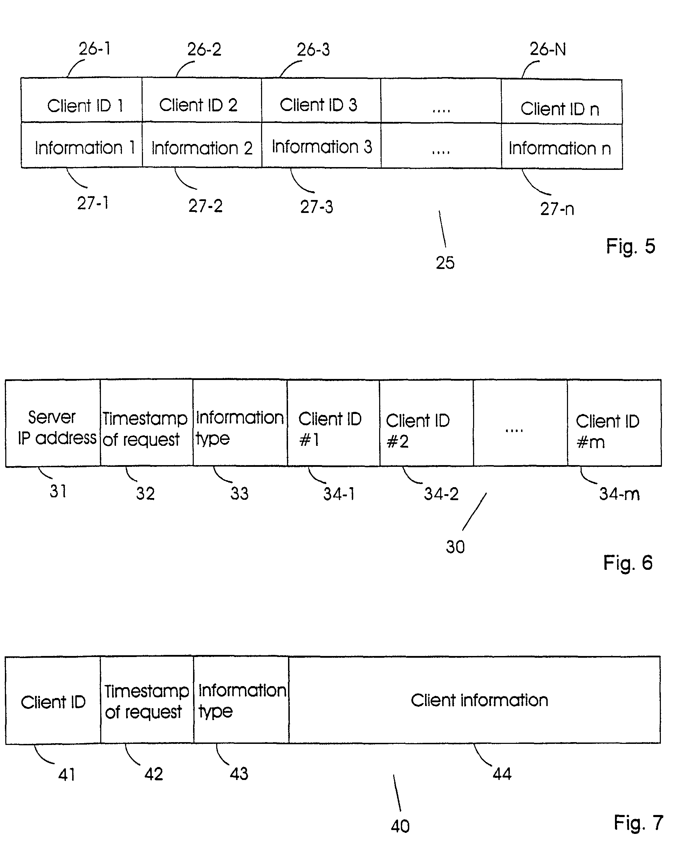

Fig. 5 shows an example of a list of clients 25 list which is maintained by the server 1. In this list 25 IP addresses assigned to the clients 2 or IDs identifying the clients 2 are stored. The list 25 can be fixed or it may be updated by a certain mechanism during the information collecting process. The list 25 may comprise IDs of all clients 2 in the network or IDs of a subset of clients 2 which need to be queried by the server 1. In Fig. 5 the list 25 comprises a client ID field 26-1, ..., 26-n and an information field 27-1, ..., 27-n for each client 2-1, ..., 2-n. The information sent by a client 2 in a response is stored in the information field 27-1, ..., 27-n corresponding to the respective client ID.

Fig. 6 shows a packet format 30 for an information request packet. The server IP address field 31 indicates the IP address of the server 1 which has sent this request. This is particularly useful in the case of different servers in the session collecting information from the same clients. The client has to know which information to send to which server. It can also be used for security reasons, so that a client does not send the information to any server, but only to that whose ID is valid.

Since this IP address may be included in the IP header anyway and can be extracted by receivers, there may be no need for the server IP address field 31 in an information request packet in some cases. It may also be preferable to put the port number, and/or the protocol number in the request packet format 30, so that packets can be sent back to the right port of the server 1. It is also possible to put the session ID of the server 1 in the request packet.

The time stamp of request field 32 indicates the time of issuing this request. The information type field 33 indicates the type of information which the server 1 is interested in. The information type may, e.g., indicate that the requested information corresponds to whether the client 2 has successfully received a certain document from the server 1, the quality of TV reception, the weather at the client's side, the electronic vote, the numbering of a population, etc. The client ID fields 34-1, ..., 34-m indicate the IDs of the clients which the server 1 instructs to report. The number of client IDs the server 1 can put into one request depends on the request size RS of the information request packet (m = RS). The requests are sent by the server 1 using multicast. All clients which joined a particular multicast group receive those requests. Upon receiving a request, a client 2 investigates the contents of the received request and decides whether it should sent a report or not. In order to decide, if a client 2 is addressed by a request, the client 2 compares the client IDs included in the request with its own client ID.

Fig. 7 shows a packet format 40 for a report. The client ID field 41 indicates the ID of the client 2 who sent this report. The time stamp of the request field 42 indicates the time stamp of the corresponding request. The time stamp is copied from the time stamp of the request field 32 in the request. This time stamp is used to compute the round trip time at the server 1. The information type field 43 indicates the type of information sent by the client 2. It corresponds to the information type field 33 in the request. The client information field 44 comprises the information to be reported. Reports are sent to the server 1 using unicast. The destination IP address of a report is set to the server IP address which is provided in the server IP address field 31 of the corresponding request.

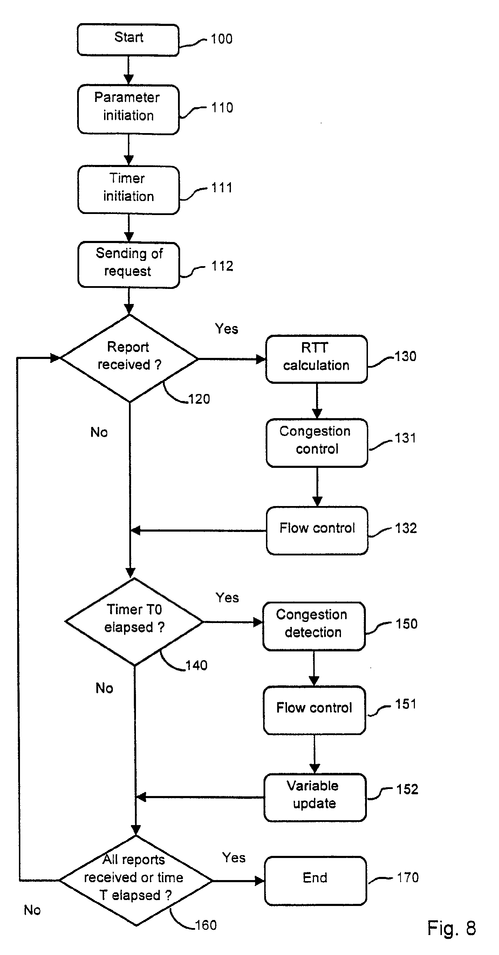

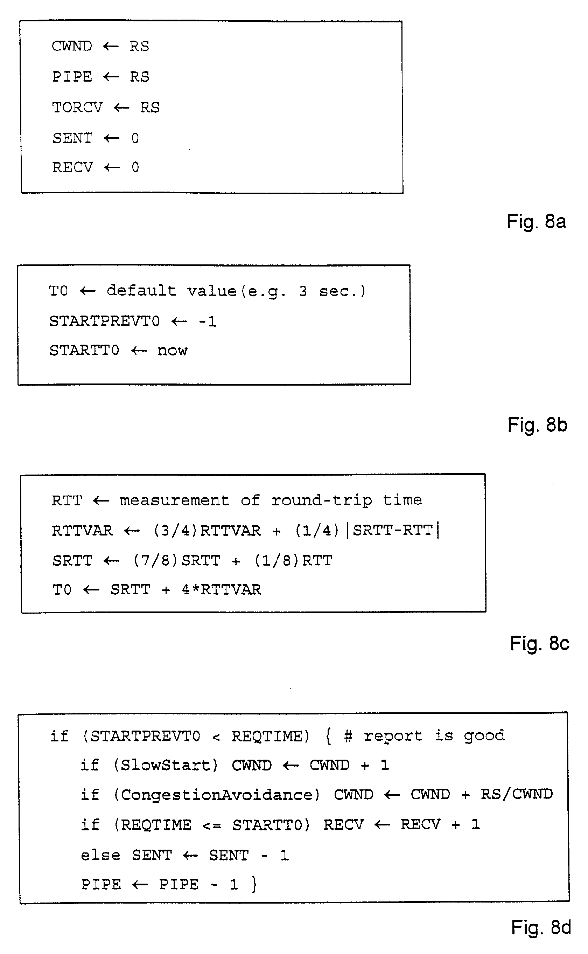

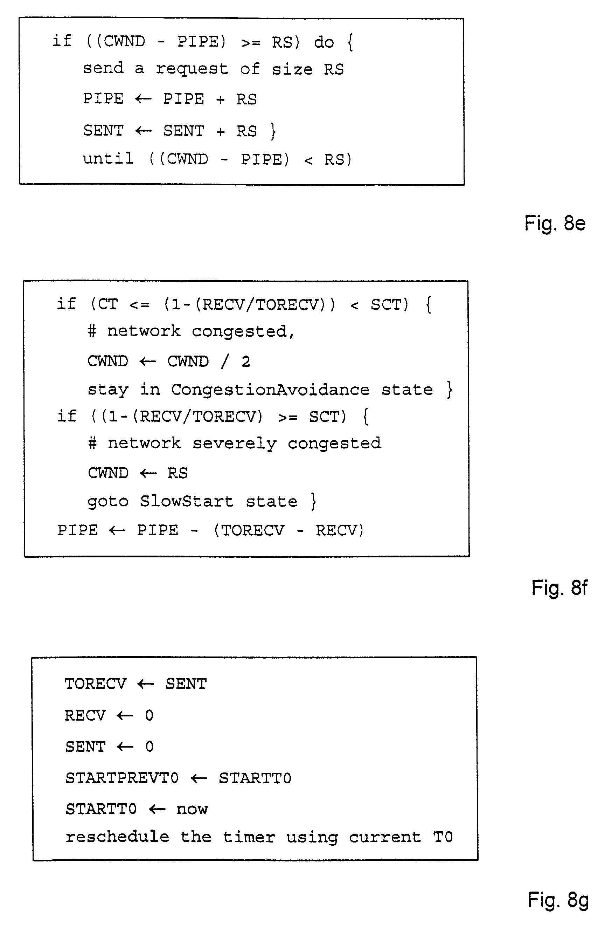

Fig. 8 is a flow chart illustrating the process of collecting information according to the present invention performed in a server 1.

In step 110, the server 1 starts the information collection session by performing a parameter initiation by setting the variables as shown in Fig. 8a.

In step 111, the server 1 schedules a timer 13 with the parameters shown in Fig. 8b.

In step 112, the server 1 continues with sending one request of size RS that probes RS clients 2.

In step 120, the server 1 decides if a report from a client 2 has arrived. When a report has been received, the server 1 proceeds to step 130.

In step 130, the round-trip time of the received report is estimated. Since the timer T0 is set based on the round-trip time, the average and the mean deviation of the round-trip times of requests/reports are calculated using an exponentially weighted moving average algorithm. The server 1 time-stamps the requests and the clients echo the time stamps in their reports. The server 1 measures the round-trip time RTT when a report arrives. The server 1 updates its estimates as shown in Fig. 8c.

The computation of the round trip time in the present invention is similar to what is done by TCP. The difference to TCP is that in the present case the round-trip time varies due to the presence of different clients with different paths in the network, while in the case of TCP, the round-trip time mainly varies due to the variation of queuing time in routers.

In the beginning of the session, the timer T0 can be set to a default value, e.g., three seconds. The collection time period T0 can also be set to its value in past information collecting sessions. The average of the round trip time can also be set to the first round trip time measurement and the variance to half this measurement. Average and variance can also be set to their values in past sessions.

With the value of T0 set in this way, reports corresponding to a request sent when the timer 13 was scheduled will very likely arrive before the expiration of the timer 13, supposed the reports and/or requests are not lost in the network. The time period T0 until the timer 13 expires provides a time window that allows the server 1 to decide whether the network is congested or not. This decision is performed by computing the loss rate of reports for the time period between the scheduling of the timer and its expiration. This congestion detection process is performed in step 150 and will be explained later.

In step 131, the server 1 performs the congestion control. In order to control the flow of traffic in the network caused by the information collecting process, the server 1 controls the rate of requests injected into the network. Congestion may appear in the forward direction due to requests and on the return path from clients 2 to the server 1. For congestion control the server 1 detains one variable CWND, called congestion window, that indicates the maximum number of clients the server can probe at the same time. The applied window-based flow control mechanism is similar to that of TCP.

Details of the congestion control are shown in Fig. 8d. In order to control the congestion of the network, the server 1 adapts the maximum number of clients CWND the server can probe at the same time. This maximum number of clients which may be queried simultaneously is called congestion window. The idea of the congestion control is to increase the congestion window until the network becomes congested, back it off, and increase it again.

If CWND = 1, the protocol operates in a stop-and-wait manner. The server 1 probes one client 2-1, waits for its report, probes another client 2-2, and so on. In order to avoid a deadlock, the server 1 takes the decision that a report is lost, if not received within a certain time. A request to a new client (or to the same client, if there is still only one client that did not sent its report) is sent when this time elapses.

If CWND = infinite, the server 1 probes all clients 2 at the same time. The server 1 waits for a certain time T0, then decides that some reports are lost and probes the corresponding clients 2 again.

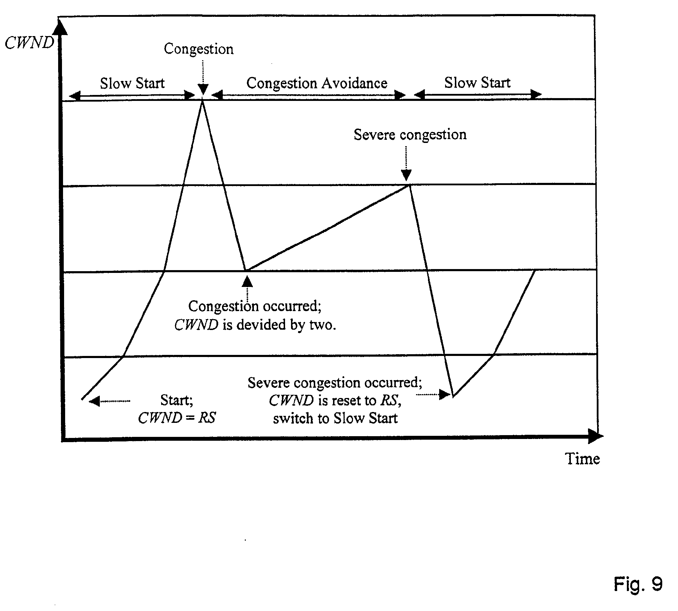

Fig. 9 shows a diagram explaining the adaptation of the congestion window CWND during the information collecting process. The maximum number CWND of clients to be queried is increased until a congestion is detected. In the beginning of the information collecting process, the congestion control operates in the Slow Start state. After a congestion has been detected, the congestion control switches to the Congestion Avoidance state. When a severe congestion is detected, the congestion control is reset to the initial values, and a new Slow Start phase begins.

Let RS be the number of clients the server probes in one request packet. This number ensures that requests are not sent to a small number of clients, and, hence, it reduces the number of requests in the forward direction (from server to clients). It also serves as a lower bound on the congestion window. If it happens that CWND becomes smaller than RS, CWND is set to RS. The server may only send requests of a size smaller than RS in the case when there are not enough clients to probe.

The server starts the session by setting the congestion window to RS. This allows the server to send a request of size RS in the beginning of the session. Some time later, reports start to arrive at the server. Upon each good report received, i.e. a report which is received before its deadline, the server increases the congestion window CWND in the following way:

$$CWND \leftarrow CWND + 1.$$

A good report indicates that the network is not congested and the server can continue increasing the congestion window. A report that has not been received within its deadline (i.e. late report) does not allow to increase the congestion window.

During the Slow Start phase, the congestion window doubles when all reports in the network (i.e., the maximum number CWND of clients to be queried) arrive. The Slow Start state continues until the network becomes congested. Here, the server divides the congestion window by two and enters the Congestion Avoidance state. The objective of the Slow Start state is to estimate quickly (and not aggressively) the network capacity at the beginning of the session. The server passes by the Slow Start state at the beginning of the session. If the network is not severely congested, the server never goes back to the Slow Start state. It may go back to the Slow Start state when a severe congestion appears. This is called a time-out event.

When the network becomes severely congested and a time-out event is detected, the server reacts by resetting the congestion window CWND to RS and by starting a new Slow Start state.

The Congestion Avoidance state follows the Slow Start state. It represents the steady state phase of the protocol, whereas the Slow Start state represents the transitory phase. During the Congestion Avoidance state, the server slowly increases the congestion window CWND. Upon each good report received, the congestion window is increased in the following way:

$$CWND \leftarrow CWND + RS/CWND.$$

With this rule, the congestion window is increased by RS when all reports in the network (CWND) arrive at the server. This allows the server to probe RS more clients in the future, what increases the number of reports in the network by RS. When a congestion is detected, the congestion window is divided by two and a new Congestion Avoidance state is started.

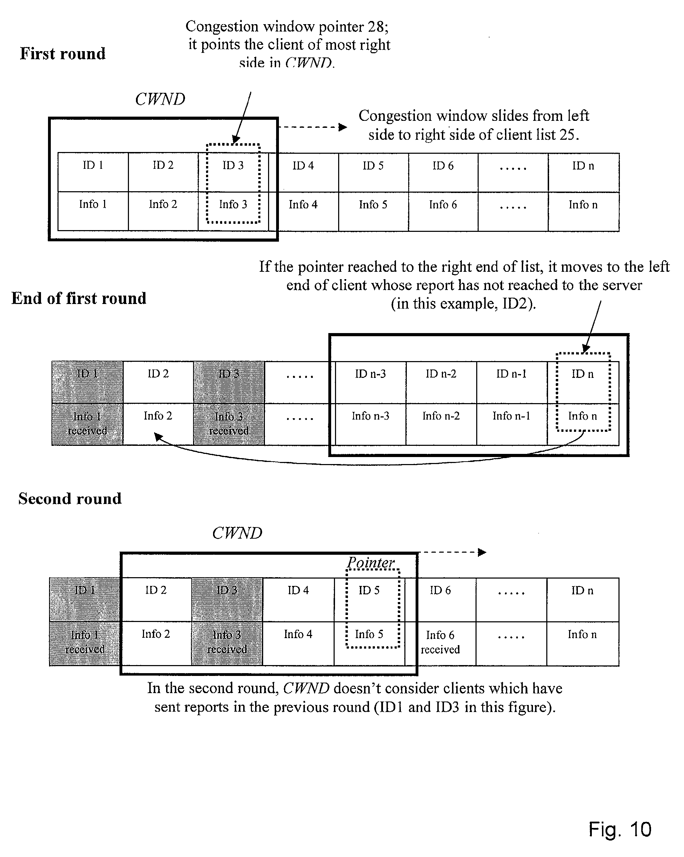

Fig. 10 shows a diagram to illustrate the sliding of the congestion window having exemplary entries. The window slides from left to right in the client list 25. A congestion window pointer 28 points to the client of the rightmost side in the congestion window. The variable CWND corresponds to the width of the congestion window. The congestion window pointer 28 moves as the congestion window slides. When the congestion window reaches the right end of the client list 25, the congestion window pointer 28 is located at the right end of the list 25. In the next step, the pointer 28 moves to the client at the left end of the list 25, the report of which has not reached the server. In the next round, the congestion window and the pointer 28 skip clients which have sent reports in the previous round. If the pointer 28 cannot find a client having no report, the server determines that all reports have been received. In this case, the information collecting protocol stops.

In step 132, the flow control is performed. New requests are injected into the network only when the number of reports in the network is smaller than the maximum number allowed by CWND. Accordingly, the number of reports in the network is limited based on the congestion window. The number of reports flying in the network is denoted by the variable PIPE. When a report is received before its deadline, the variable PIPE is decreased by one. When PIPE falls below CWND, the server 1 transmits a new request packet of size RS, if the congestion windows allows. The operations of the server 1 in step 132 are shown in Fig. 8e.

In order to receive the maximum number of reports in the available time T, or, if T is very large, to minimize the time necessary to get reports from all clients, the server 1 operates in the following way:

In a first round the server sends requests to all clients. It does not retransmit requests to clients whose reports are lost. The absence of a report from a client can be the result of the loss of the request itself rather than the loss of the report. Still in this case, the server does not retransmit its request.

In a second round the server sends requests to clients whose reports were lost in the first round. In a third round the server sends requests to clients whose reports were lost in the first two rounds. The server continues sending requests in rounds until all the reports are received or the available time T elapses.

The server 1 crosses the list of clients 25 from left to right and sends requests only to those clients, the reports of which are lost or to those clients which it has never probed. The server 1 does not resend a request to a client before taking the decision that its report is lost.

Probing the clients in rounds is better than wasting time sending multiple requests to a client which is located behind a congested link. The network congestion may be transitory and disappear until the next request in the next round is sent to the client.

Furthermore, the operation in rounds has the advantage that an excessive delay that some reports may experience is absorbed. There is a good chance that reports experiencing an excessive delay will arrive at the server between the transmission of a request in a round and the retransmission of the request in the next round. Although the excessive delay of a packet is considered to be a sign of a network congestion, the delayed report is not discarded and its client information is stored in the respective information field 27 of the client list 25.

When the server 1 probes the clients 2 in rounds and the congestion window allows the server 1 to inject new requests into the network, it probes clients 2 to which it did not send any request. When the list 25 of all clients is crossed (e.g. from left to right), the server 1 goes to the left, starts a new round and transmits requests to the clients that did not send their reports in the first round. The same applies when the second round ends, and so on. This continues until either all clients have sent their reports or the available time T elapses.

The server 1 can send requests when a report is received, or at other moments. For example, new requests can also be sent when the time period T0 elapses, e.g., in step 151 of the timer expiration process.

In step 140 of Fig. 8, the server 1 determines if the collection time period T0 has expired. The timer 13 is scheduled at the beginning of the session after the transmission of the first request. The timer 13 is then rescheduled (with the new value for T0) when it expires.

The timer 13 may also serve for other purposes. It may trigger the process of distinguishing good reports from bad reports, to decide if a report (or a request) is lost or not and/or to slide the left hand side of the congestion window. Finally, it may serve to trigger the transmission of new requests in the same way as the arrival of a good report may trigger such a transmission.

When the time period T0 has expired, the congestion detection in step 150 is performed. Details are shown in Fig. 8f. In order to detect a network congestion, the loss rate of reports during a time window equal to T0 is computed. The server 1 compares the computed loss rate with two thresholds (CT, SCT) to decide whether the network is not congested, congested, or severely congested. The computation of the loss rate and, consequently, the adaptation of the congestion window to the detected network congestion are also performed when the timer has expired.

When the timer for T0 is scheduled, the server 1 detains a variable TORECV which indicates the number of reports to be received until the time period T0 expires. Let RECV be the number of good reports received between the scheduling of the timer and its expiration. The difference TORECV - RECV indicates the number of reports that have been lost in the network. Accordingly, the loss rate of reports is estimated to: 1 - (RECV/TORECV).

The network is considered as congested, if the loss rate exceeds a certain threshold CT (Congestion Threshold). If the network congestion is detected, the congestion window CWND is divided by two. The network is considered as severely congested, if the loss rate exceeds a higher threshold SCT (Severe Congestion Threshold) > CT. In this case the congestion window CWND is reset to RS and a Slow Start phase is initiated.

The thresholds CT and SCT are two parameters of the information collecting protocol. They can be set to some fixed default values, e.g., CT = 0.1 and SCT = 0.9. The thresholds CT and SCT may also be dynamically adjusted, e.g.,

$$CT = \min(0.1, RS/CWND)$$

$$SCT = \max(0.9, (CWND-RS)/CWND).$$

The maximum and minimum functions in the expressions for CT and SCT are used to ensure that these thresholds do not take unrealistic values, when the congestion window is of a small size. For a large congestion window, CT is equal to RS/CWND. This means that a network congestion is concluded when more than RS reports are lost in a window, respectively, a severe congestion is concluded, when less than RS reports are received in a window.

The above explained way to set the congestion thresholds is complying with TCP. TCP considers the network to be congested, if one packet is lost. The network is considered to be severely congested by TCP, when all packets are lost. With the above settings of CT and SCT the present invention is able to control the congestion in the forward direction and the congestion in the reverse direction. The flow of requests in the present invention is friendly with applications using TCP. The loss of a packet in the forward direction request results in the loss of RS reports, which for its part, leads to a division of the congestion window by two. This is similar to the reaction of TCP to the loss of a data packet. Since the congestion window in the present invention also increases similarly to TCP, the generated traffic in the network is friendly with applications using TCP.

Upon receiving a report, the server classifies reports in "good" and "late" reports. A good report is a report received before its deadline. The deadline of a report is the expiration of the timer. After this deadline, the report is assumed to be lost. A report is considered by the server as a late report when it arrives after its deadline. A late report is still used to update the round-trip time. The content of a late report is considered and the received information is added to the client list 25. However, it is not used to increase the congestion window or to change the variable PIPE corresponding to the number of reports flying in the network. The server does not ask a client that has sent a late report to resend it in subsequent rounds. Accordingly, a report is only late from a congestion control point of view. The server does not resend a request to a client whose report has not arrived until its deadline. In subsequent rounds, the server only sends requests to clients whose reports did not arrive at all and are considered to be lost.

In order to distinguish good reports from late reports, the server investigates the time stamp of a report which was echoed by the client. The time stamp indicates the time REQTIME at which the corresponding request has been issued. Let STARTT0 be the scheduling time of the timer and STARTPREVT0 be the scheduling time of the previous timer. A report is a good report, if and only if

$$STARTPREVT0 < REQTIME.$$

When the timer has expired and before it is rescheduled, the above variables are updated in the following way:

$$STARTPREVT0 \leftarrow STARTT0$$

$$STARTT0 \leftarrow now.$$

In step 131 the left hand side of the congestion window is slided when a good report has arrived. This sliding is implemented by decrementing the variable PIPE by the number of received good reports. However, the variable PIPE has also to be decremented when reports are considered to be lost. Otherwise, PIPE overestimates the number of reports in the network, which would drain out the network and stop the protocol. As explained above, when the timer expires, the server has an idea on how many reports have been lost since the timer has been scheduled. This number is approximated by the server to: (TORECV - RECV). Therefore, when the timer expires, the variable PIPE is decremented by

$$PIPE \leftarrow PIPE - (TORECV - RECV).$$

In step 151 the flow control is performed in order to transmit new request packets of size RS to clients, if the congestion window size allows. In this case, the variable PIPE is increased accordingly. This flow control step is identical to step 132.

In step 152 some variables are updated. Details are shown in Fig. 8g. As already mentioned, the variable TORECV indicates the number of reports to be received between the scheduling of a timer and its expiration. In order to update this variable, a new variable SENT is introduced. This variable indicates the number of requests sent by the server between the scheduling of the timer and its expiration. When the timer expires, the server updates these variables as follows:

$$TORECV \leftarrow SENT$$

$$SENT \leftarrow 0.$$

As already explained, the variable SENT indicates the number of requests sent between STARTPREVT0 and STARTT0. These requests are to be received before the timer scheduled at time STARTT0 expires. When new requests are transmitted, the variable SENT is incremented as follows:

$$SENT \leftarrow SENT + (RS \times NRP).$$

The variable SENT is reset to zero when the timer expires. It is decremented when a good report arrives. Since the variable SENT indicates the respective number of requests sent during one turnaround time of the timer (the corresponding reports have to be received in the next turnaround time of the timer), SENT has to be decremented by 'one', if a report is received much earlier than its deadline. Such a report is expected to arrive in the next turnaround time of the timer, accordingly it must not be included in the variable TORECV which is set to SENT when the timer expires. Accordingly, when a good report arrives, two distinct cases have to be distinguished:

i) STARTPREVT0 < REQTIME < = STARTT0
In this case, the received report corresponds to a request which was issued between the scheduling time of the previous timer and the scheduling time of the actual timer. The received report is one of the expected reports whose number is indicated by the variable TORECV. Since the received report does not correspond to a request issued during the actual turnaround time of the timer, the variable SENT is not decremented.

ii) STARTT0 < REQTIME
In this case, the received report corresponds to a request which was sent after the scheduling time STARTT0 of the present timer, so it is not expected to be received during the next turnaround time of the timer. Accordingly, the variable SENT is decremented by 'one'. It is noted that the variable TORECV is set to SENT, when the timer expires.

In step 160 the server decides if all reports are received or the available time T has elapsed. In this case, the protocol stops in step 170. Otherwise the servers returns to step 120 to determine if a new report has been received.

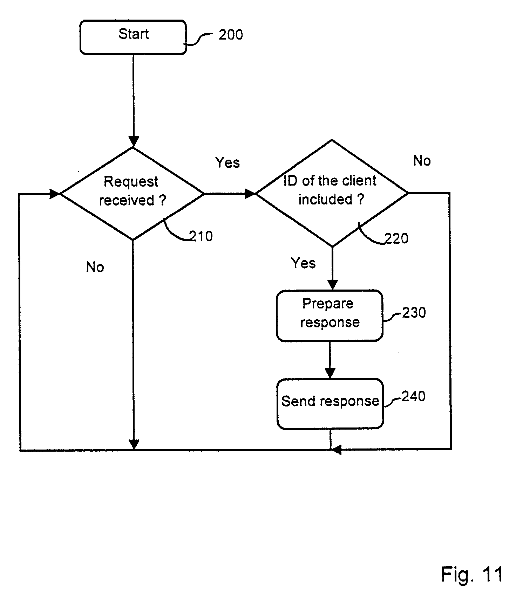

Fig. 11 is a flow chart illustrating a process in a client according to an embodiment of the present invention. The server 1 of the multicast session sends requests asking a certain number of clients 2 to send their reports. A request is received by all clients (at the IP level), but only those clients to which the request is addressed (at the session level) send their reports. Filtering of requests is preferably performed at the session level. This can be realized by sending the session IDs of clients of interest in the request. When receiving a request the client branches in step 210 to step 220.

In step 220 the client decides if the request includes the ID of the client by investigating the list of IDs carried by the request. If the client's ID exists in the ID list, the client proceeds to step 230. If the client's ID is not included in the ID list of the request, the client cancels the request and does not send a report.

In step 230 the client prepares the response to the request. The client investigates the information type field 33 of the request and prepares the requested information. The client generates a report packet for the response according to the packet format 40 for reports. The client puts its client ID in the client ID field 41 of the report packet and echoes the time stamp of the request in the corresponding time stamp field 42 of the report packet.

In step 240 the client sends the response to the server from which the client has received the corresponding request. The respective server IP address is provided in the server IP address field 31 of the received request.

Instead of sending separate IDs of a plurality of clients in a request, the client IDs may also be aggregated in the request so as to reduce the volume of request. For example, instead of sending a set of contiguous IDs, the server can send the first and the last ID instead. All clients with an ID between the first and the last ID in the set respond to the request by sending their reports. Aggregation can also be done by using IP address masks, e.g., in the same way as in CIDR (Classless Inter-Domain Routing).

The information collecting protocol according to the present invention is compatible with the congestion control mechanism of TCP. There is a case that a bottleneck in the network exists in the forward direction (from the server to the clients) while the network on the return path (from the clients to the server) is not congested and all requests cross this bottleneck. This situation may, e.g., appear in a network, where the server accesses the clients via a slow satellite link. The satellite link is slow compared to the available bandwidth on the return path from the clients to the server. As already explained, the loss of a request packet in the forward direction results in cutting the congestion window in half. Since, in addition, the congestion window of the present information collecting protocol is increased in an additive way, the throughput of the information collecting protocol and the throughput of TCP are equal in terms of packets per second. Furthermore, they are equal in terms of bits per second, when the size of a request packet (carrying RS client IDs) is equal to that of a TCP packet.

There is another case that a bottleneck exists in the return path while the forward direction is not congested and all reports cross this bottleneck. In the Congestion Avoidance state of the information collecting protocol, the congestion window is divided by two, when (more than) RS reports are lost. On the other hand, when CWND reports are received, the number of reports in the network is increased by RS. Accordingly, the flow of reports in the information collecting protocol behaves in the same way as an aggregate of RS TCP connections having a packet size equal to the size of a report. If the size of RS reports is equal to that of a TCP packet, the throughput of reports in bits per second is comparable to that of a competing TCP connection.

Accordingly, the behaviour of the present information collecting protocol may be controlled by setting the number of clients RS the server probes in one request. If RS is chosen in a way that the size of request packets is equal to that of normal TCP packets, the information collecting protocol is TCP friendly in the forward direction. If RS is chosen so that the size of RS reports is equal to that of a normal TCP packet, the information collecting protocol is TCP friendly in the reverse direction.

## Claims

1. Method for collecting information from a set of network devices (2), comprising:

   - sending one or more information requests to the devices (2), which instruct a number of devices (2) to respond, and
   - collecting responses from the queried devices (2),

   wherein the number of devices which are queried in one step is controlled based on the received responses in order to reduce the risk of a network congestion.

2. Method according to claim 1, comprising the steps of:

   (a) determining a maximum number (CWND) of devices to be queried;
   (b) selecting devices (2) from the set of devices under consideration of the maximum number (CWND) of devices to be queried;
   (c) sending information requests asking the selected devices (2) to respond;
   (d) collecting responses comprising the requested information from the queried devices (2);
   (e) detecting a network congestion based on the number of collected responses;
   (f) updating the maximum number (CWND) of devices to be queried based on the detected network congestion; and
   (g) continuing with step (b).

3. Method according to claim 1 or 2, wherein responses from the queried devices (2) are collected for a determined collection time period (T0).

4. Method according to any one of claims 1 to 3, wherein devices (2) are selected in step (b) for which responses have not yet been received.

5. Method according to any one of claims 1 to 4, wherein new devices (2) are selected which have not been selected before, when continuing from step (g).

6. Method according to any one of claims 1 to 5, querying the devices (2) in rounds, wherein in the first round all devices (2) are queried by repeating steps (a) to (g), and in subsequent rounds those devices (2) are queried for which no response to a request in the previous round has been received.

7. Method according to any one of claims 1 to 6, wherein requests are sent to devices (2) until responsed from all devices (2) have been collected or a predetermined time period (T) has expired.

8. Method according to any one of claims 1 to 7, wherein the information requests are arranged in information request packets each comprising information requests for a number (RS) of the selected devices.

**9.** Method according to claim 8, comprising:

- determining a number (NRP) of information request packets under consideration of the maximum number (CWND) of devices to be queried; and
- sending the respective number (NRP) of information request packets to the devices (2).

**10.** Method according to claim 8 or 9, wherein an information request packet is multicast to a plurality of devices (2).

**11.** Method according to any one of claims 1 to 10, wherein an information request or an information request packet comprises device identification information to indicate one or more selected devices and/or an information type to indicate the type of requested information.

**12.** Method according to claim 11, wherein an information request or an information request packet comprises one or more device identification codes which each identify a respective device (2).

**13.** Method according to any one of claims 1 to 12, wherein an information request or information request packet is sent, if the difference between the maximum number (CWND) of devices to be queried and the number (PIPE) of requested reports which have not yet been received exceeds a predetermined threshold.

**14.** Method according to any one of claims 1 to 13, wherein an information request or information request packet is sent when a timer (13) corresponding to the collection time period (T0) has expired and/or when a response from a device (2) has been received.

**15.** Method according to any one of claims 1 to 14, comprising:

- estimating a round-trip time of a device query based on the time period between sending a request and receiving a respective response.

**16.** Method according to claim 15, comprising:

- setting the collection time period (T0) based on the estimated round-trip times of device queries, in particular based on the average (SRTT) and the mean deviation (RTTVAR) of the estimated round-trip times.

**17.** Method according to any one of claims 1 to 16, comprising:

- receiving a response for an information request;
- determining the time when the corresponding request to the response was sent;
- comparing the determined request time to a deadline for the request; and
- labelling the response based on the result of the comparison.

**18.** Method according to claim 17, comprising:

- calculating the loss rate for responses; and
- determining the network congestion by comparing the calculated loss rate with a congestion threshold (CT).

**19.** Method according to claim 18, wherein the calculated rate is compared with a plurality of thresholds (CT, SCT) in order to detect multiple network congestion states (Congestion state, Severe Congestion state).

**20.** Method according to any one of claims 1 to 20, wherein the network congestion is determined when a timer (13) corresponding to the collection time period (T0) has expired.

**21.** Method according to any one of claims 1 to 19, comprising:

- determining a flow control state (Slow Start, Congestion Avoidance) based on the detected network congestion; and
- updating the maximum number (CWND) of devices to be queried based on the determined flow control state.

**22.** Method according to any one of claims 17 to 21, wherein the maximum number (CWND) of devices to be queried is increased, in particular incremented by a predetermined or calculated number, when a report is received before its deadline.

**23.** Method according to any one of claims 1 to 22, wherein the maximum number (CWND) of devices to be queried is decreased, in particular divided by a predetermined number, when a network congestion is detected.

**24.** Method according to any one of claims 1 to 23, wherein, upon receiving an information request or an information request packet, a device determines if it is asked to respond to the request, and, in the affirmative case, sends the requested information to the sender of the request.

**25.** Method according to claim 24, wherein the device examines the device identification information received with a request, in particular by comparing device identification codes, in order to determine if the device is addressed by the received request or request packet.

26. Apparatus for collecting information from a set of devices (2), comprising

   - sending means (17) for sending information requests to devices (2), which instruct a number of devices (2) to respond,
   - receiving means (18) for receiving responses from the queried devices (2), and
   - flow control means (20) to control the number of devices which are queried in one step based on the received responses in order to reduce the risk of a network congestion.

27. Apparatus according to claim 26 comprising

   - selection means (14) for selecting devices (2) from the set of devices, wherein the number of selected devices is smaller than or equal to the maximum number (CWND) of devices to be queried, and
   - network congestion detection means (19) for detecting a network congestion based on the number of received responses,

   wherein the flow control means (20) determine a maximum number (CWND) of devices to be queried based on the detected network congestion.

28. Apparatus according to claim 26 or 27, wherein the selection means (14) select devices (2) for which responses have not yet been received or devices (2) which have not been selected before.

29. Apparatus according to any one of claims 26 to 28, comprising a timer (13) to indicate a collection time period (T0) to collect responses from the queried devices (2) and/or to indicate a predetermined time period (T) during which requests are sent to devices (2).

30. Apparatus according to claim 29, wherein the network congestion detection means (19) detect a network congestion when the collection time period (T0) expires.

31. Apparatus according to any one of claims 26 to 30, comprising list operation means (15) arranged to maintain lists of devices to be queried, wherein the selection means (14) select devices (2) from a respective list, and wherein a first list comprises references to all devices (2) of the set of devices, and a second and further lists comprise references to devices (2) for which no response to a request resulting from a previous selection of the device (2) has been received.

32. Apparatus according to any one of claims 26 to 31, comprising request generation means (16) arranged to generate information requests to be sent to the devices (2) in order to query the maximum number (CWND) of devices.

33. Apparatus according to claim 32, wherein the request generation means (16) generate information request packets each comprising information requests for a number (RS) of the selected devices (2).

34. Apparatus according to claim 32 or 33, wherein the request generation means (16) determine a number (NRP) of information request packets to be sent under consideration of the maximum number (CWND) of devices to be queried.

35. Apparatus according to any one of claims 32 to 34, wherein the request generation means (16) are executed when the timer (13) indicates that the collection time period (T0) has expired and/or when a response from a device (2) has been received.

36. Apparatus according to any one of claims 32 to 35, wherein the request generation means (16) generate device identification information to indicate a selected device (2) or a group of selected devices (2), and wherein the information request comprises at least the device identification information of the selected device (2) or a group of selected devices (2).

37. Apparatus according to any one of claims 26 to 36, comprising round-trip time estimation means (21) arranged to estimate the round-trip time of a device query based on the time period between sending a request and receiving a respective response.

38. Apparatus according to any one of claims 26 to 37, wherein the network congestion detection means (19) judge a received response based on the time when the corresponding request was sent, wherein the response is a good response if it was received before a deadline corresponding to the respective request time.

39. Apparatus according to claim 37, wherein the network congestion detection means (19) calculate a loss rate for responses and determine the network congestion by comparing the calculated loss rate with a congestion threshold (CT).

40. Apparatus according to any one of claims 36 to 38, wherein the flow control means (20) determine a flow control state (Slow Start, Congestion Avoidance) based on the detected network congestion and update the maximum number (CWND) of devices to be queried based on the determined flow control state.

Fig. 1

Fig. 2

Fig. 3

Fig. 4

| Client ID 1 | Client ID 2 | Client ID 3 | .... | Client ID n |
|---|---|---|---|---|
| Information 1 | Information 2 | Information 3 | .... | Information n |

26-1   26-2   26-3   26-N

27-1   27-2   27-3   27-n

25

Fig. 5

| Server IP address | Timestamp of request | Information type | Client ID #1 | Client ID #2 | .... | Client ID #m |
|---|---|---|---|---|---|---|

31   32   33   34-1   34-2   34-m

30

Fig. 6

| Client ID | Timestamp of request | Information type | Client information |
|---|---|---|---|

41   42   43   44

40

Fig. 7

```
        ┌─────────────┐
        │   Start     │──── 100
        └─────────────┘
               │
               ▼
        ┌─────────────┐
        │  Parameter  │──── 110
        │  initiation │
        └─────────────┘
               │
               ▼
        ┌─────────────┐
        │    Timer    │──── 111
        │  initiation │
        └─────────────┘
               │
               ▼
        ┌─────────────┐
        │  Sending of │──── 112
        │   request   │
        └─────────────┘
               │
               ▼
           ◇─────────◇        Yes      ┌─────────────┐
           │  Report  │──────────────▶ │     RTT     │──── 130
           │ received ?│               │ calculation │
           ◇─────────◇                 └─────────────┘
              120                             │
               │ No                           ▼
                                       ┌─────────────┐
                                       │ Congestion  │──── 131
                                       │   control   │
                                       └─────────────┘
                                             │
                                             ▼
                                       ┌─────────────┐
               ◀───────────────────────│ Flow control│──── 132
               │                        └─────────────┘
               ▼
           ◇─────────◇        Yes      ┌─────────────┐
           │ Timer T0 │──────────────▶ │ Congestion  │──── 150
           │ elapsed ?│               │  detection  │
           ◇─────────◇                 └─────────────┘
              140                             │
               │ No                           ▼
                                       ┌─────────────┐
                                       │ Flow control│──── 151
                                       └─────────────┘
                                             │
                                             ▼
                                       ┌─────────────┐
               ◀───────────────────────│  Variable   │──── 152
               │                        │   update    │
               ▼                        └─────────────┘
           ◇───────────◇      Yes      ┌─────────────┐
           │ All reports │────────────▶│     End     │──── 170
           │ received or │             └─────────────┘
           │ time T elapsed ?│
           ◇───────────◇
         No    160
```

Fig. 8

```
CWND  ← RS
PIPE  ← RS
TORCV ← RS
SENT  ← 0
RECV  ← 0
```

Fig. 8a

```
T0 ← default value(e.g. 3 sec.)
STARTPREVT0 ← -1
STARTT0 ← now
```

Fig. 8b

```
RTT    ← measurement of round-trip time
RTTVAR ← (3/4)RTTVAR + (1/4)|SRTT-RTT|
SRTT   ← (7/8)SRTT + (1/8)RTT
T0     ← SRTT + 4*RTTVAR
```

Fig. 8c

```
if (STARTPREVT0 < REQTIME) { # report is good
    if (SlowStart) CWND ← CWND + 1
    if (CongestionAvoidance) CWND ← CWND + RS/CWND
    if (REQTIME <= STARTT0) RECV ← RECV + 1
    else SENT ← SENT - 1
    PIPE ← PIPE - 1 }
```

Fig. 8d

```
if ((CWND - PIPE) >= RS) do {
    send a request of size RS
    PIPE ← PIPE + RS
    SENT ← SENT + RS }
    until ((CWND - PIPE) < RS)
```

Fig. 8e

```
if (CT <= (1-(RECV/TORECV)) < SCT) {
    # network congested,
    CWND ← CWND / 2
    stay in CongestionAvoidance state }
if ((1-(RECV/TORECV) >= SCT) {
    # network severely congested
    CWND ← RS
    goto SlowStart state }
PIPE ← PIPE - (TORECV - RECV)
```

Fig. 8f

```
TORECV ← SENT
RECV ← 0
SENT ← 0
STARTPREVT0 ← STARTT0
STARTT0 ← now
reschedule the timer using current T0
```

Fig. 8g

CWND

Congestion

Slow Start | Congestion Avoidance | Slow Start

Severe congestion

Congestion occurred;
*CWND* is devided by two.

Start;
*CWND = RS*

Severe congestion occurred;
*CWND* is reset to *RS*,
switch to Slow Start

Time

Fig. 9

EP 1 443 704 A1

**First round**

Congestion window pointer 28;
it points the client of most right
side in *CWND*.

*CWND*

| ID 1 | ID 2 | ID 3 | ID 4 | ID 5 | ID 6 | . . . . . | ID n |
|------|------|------|------|------|------|-----------|------|
| Info 1 | Info 2 | Info 3 | Info 4 | Info 5 | Info 6 | . . . . . | Info n |

Congestion window slides from left
side to right side of client list 25.

**End of first round**

If the pointer reached to the right end of list, it moves to the left
end of client whose report has not reached to the server
(in this example, ID2).

| ID 1 | ID 2 | ID 3 | . . . . . | ID n-3 | ID n-2 | ID n-1 | ID n |
|------|------|------|-----------|--------|--------|--------|------|
| Info 1 received | Info 2 | Info 3 received | . . . . . | Info n-3 | Info n-2 | Info n-1 | Info n |

**Second round**

*CWND*

*Pointer*

| ID 1 | ID 2 | ID 3 | ID 4 | ID 5 | ID 6 | . . . . . | ID n |
|------|------|------|------|------|------|-----------|------|
| Info 1 received | Info 2 | Info 3 received | Info 4 | Info 5 | Info 6 received | . . . . . | Info n |

In the second round, *CWND* doesn't consider clients which have
sent reports in the previous round (ID1 and ID3 in this figure).

Fig. 10

Start — 200

Request received ? 210

Yes

ID of the client included ? 220

No

No

Yes

Prepare response — 230

Send response — 240

Fig. 11

**European Patent Office**

## EUROPEAN SEARCH REPORT

Application Number

EP 03 29 0255

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MOGHE P ET AL: "RAP-rate adaptive polling for network management applications" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15 February 1998 (1998-02-15), pages 395-399, XP010267413 ISBN: 0-7803-4351-4 * abstract * | 1-7,9, 14,15, 17-23, 26-32, 35,37-40 | H04L12/26 H04L12/18 |
| A | * paragraph [003.] - paragraph [04.4] * | 13,16 | |
| Y | | 8,10-12, 24,25, 33,34,36 | |
| Y | D. OOMS, W. LIVENS, O. PARIDAENS: "Connectionless Multicast" IETF DRAFT-OOMS-CL-MULTICAST-02, [Online] April 2000 (2000-04), pages 1-24, XP002247017 Retrieved from the Internet: <URL:http://www.watersprings.org/pub/id/draft-ooms-cl-multicast-02.txt> [retrieved on 2003-07-08] * page 7, line 15 - page 8, line 4 * * paragraph [08.1] * | 8,10-12, 24,25, 33,34,36 | |
| A | | 9 | |

TECHNICAL FIELDS SEARCHED (Int.Cl.7)

H04L

-/--

The present search report has been drawn up for all claims

| Place of search | Date of completion of the search | Examiner |
|---|---|---|
| THE HAGUE | 9 July 2003 | Perrier, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 03 29 0255

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | VIJAYAN PRABHAKARAN, JOSEPH STANLEY, PAUL BARFORD: "High Throughput Data Transfers using the Tornado Transport Protocol" INTERNET ARTICLE, [Online] 22 November 2002 (2002-11-22), page 1 XP002247018 http://www.cs.wisc.edu/~jass/ Retrieved from the Internet: <URL:http://www.cs.wisc.edu/~jass/tornado/tornado.pdf> [retrieved on 2003-07-09] * page 4, left-hand column, line 28 - right-hand column, line 3 * ----- | 18,19,39 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 9 July 2003 | Perrier, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document